# EUROPEAN PATENT APPLICATION

(11) **EP 3 392 077 A1**
(43) Date of publication of application: **24.10.2018**
(21) Application number: 18167643.8
(22) Date of filing: 17.04.2018
(51) Int. Cl.: B60N 2/00, B60N 2/70

(54) **SEATING DETECTION DEVICE**

(30) Priority: 17.04.2017 JP 2017081028
(71) Applicant: AISIN SEIKI KABUSHIKI KAISHA, Kariya-shi, Aichi-ken, 448-8650 (JP)
(72) Inventor: NAKAYAMA, Koichi, KARIYA-SHI, AICHI-KEN, 448-8650 (JP)
(74) Representative: Cabinet Beau de Loménie

(57) **Abstract**

A seating detection device (100), which is disposed below a cushion pad (CP) of a vehicle seat, includes a load sensor (30) that detects a load that is applied to the vehicle seat and transmitted via the cushion pad (CP); a first holder (10) that supports the load sensor (30); and a second holder (20) that supports the first holder (10) and includes an engaging portion (21) that engages with a support member (CS) for supporting the cushion pad (CP), wherein the second holder (20) supports the first holder (10) so as to be capable of moving the first holder (10) in a vertical direction.

## Description

### TECHNICAL FIELD

This disclosure relates to a seating detection device.

### BACKGROUND DISCUSSION

As an example of a seating detection device, a seating sensor that is included in a seat apparatus and is disposed below a seating portion of a cushion pad is disclosed in JP 2014-121884A (Reference 1). The seating sensor includes a pressure sensitive switch disposed to have a certain gap with respect to the cushion pad in a state of being assembled to a vehicle seat. Therefore, when an occupant sits on the seat, the pressure sensitive switch is pressed by a lower surface of the cushion pad so that the seating sensor detects seating.

However, in such a seating sensor described above, there is a concern that a size of the gap between the cushion pad and the pressure sensitive switch varies due to a dimensional variation of a configuration element with respect to an assembling position of the seating sensor, an assembling variation of the seating sensor with respect to the vehicle seat, or the like. As a result, there is a concern that a load acting on the pressure sensitive switch from the lower surface of the cushion pad changes and detection accuracy of seating decreases. Moreover, such a situation is not limited to the seating detection device that detects seating by the pressure sensitive switch, but is also common in a seating detection device that detects seating by a sensor for detecting a load such as a strain gauge.

Thus, a need exists for a seating detection device capable of suppressing deterioration of positioning accuracy of a load sensor with respect to a cushion pad.

### SUMMARY

A seating detection device according to an aspect of this disclosure, which is disposed below a cushion pad of a vehicle seat, includes a load sensor that detects a load that is applied to the vehicle seat and transmitted via the cushion pad; a first holder that supports the load sensor; and a second holder that supports the first holder and includes an engaging portion that engages with a support member for supporting the cushion pad, in which the second holder supports the first holder so as to be capable of moving the first holder in a vertical direction.

According to the configuration, it is possible to adjust a distance between the cushion pad of the vehicle seat and the load sensor in the vertical direction by moving the first holder with respect to the second holder. Therefore, it is possible to suppress deterioration of positioning accuracy of the load sensor with respect to the vehicle seat.

In the seating detection device according to the aspect of this disclosure, it is preferable that the first holder has a vertical wall extending around the load sensor and above the load sensor.

According to the configuration, when an occupant sits on the vehicle seat, a direction in which the cushion pad is displaced by being in contact with the vertical wall is restricted. That is, a portion facing the load sensor is likely to be displaced downward in the cushion pad. As a result, it is possible to further suppress deterioration of the detection accuracy of the load sensor.

In the seating detection device according to the aspect of this disclosure, it is preferable that the seating detection device further includes a notifying portion that notifies that an upper end of the vertical wall is in contact with the cushion pad.

According to the configuration, an operator who assembles the seating detection device on the vehicle seat can know the contact between the vertical wall and the cushion pad by the notifying portion. Therefore, when the vertical wall is in contact with the cushion pad, it is possible to further easily adjust the position of the load sensor by locating the load sensor at an ideal position with respect to the vehicle seat.

In the seating detection device according to the aspect of this disclosure, it is preferable that the first holder is provided with a through-hole penetrating the first holder in the vertical direction.

According to the configuration, it is possible to measure the distance between the load sensor and the cushion pad by inserting, for example, a rod-shaped gauge into the through-hole formed in the first holder. Therefore, it is possible to easily adjust the position of the load sensor with respect to the cushion pad in the vertical direction while using the gauge.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a side view illustrating a schematic configuration of a vehicle seat;
Fig. 2 is a perspective view illustrating a schematic configuration of a cushion pad and a cushion spring;
Fig. 3 is a plan view of a seating detection device;
Figs. 4A and 4B are sectional views that are taken along line IVA-IVA of the seating detection device in Fig. 3;
Fig. 5 is a sectional view that is taken along line V-V of the seating detection device in Fig. 3;
Fig. 6 is a sectional view of the seating detection device before a distance between the cushion pad and a load sensor is adjusted;
Fig. 7 is a sectional view of the seating detection device after the distance between the cushion pad and the load sensor is adjusted; and
Figs. 8A and 8B are sectional views of a seating detection device according to a modification example.

### DETAILED DESCRIPTION

Hereinafter, an embodiment of a seating detection device will be described. The seating detection device of the embodiment is mounted on a seating portion of a vehicle seat.

Moreover, in the following description, the direction is defined according to the vehicle seat in a state of being attached to a vehicle. That is, a width direction of the vehicle seat is referred to as a "width direction X", a forward and backward direction of the vehicle seat is referred to as a "forward and backward direction Y", and an upward and downward direction of the vehicle seat is referred to as a "vertical direction Z".

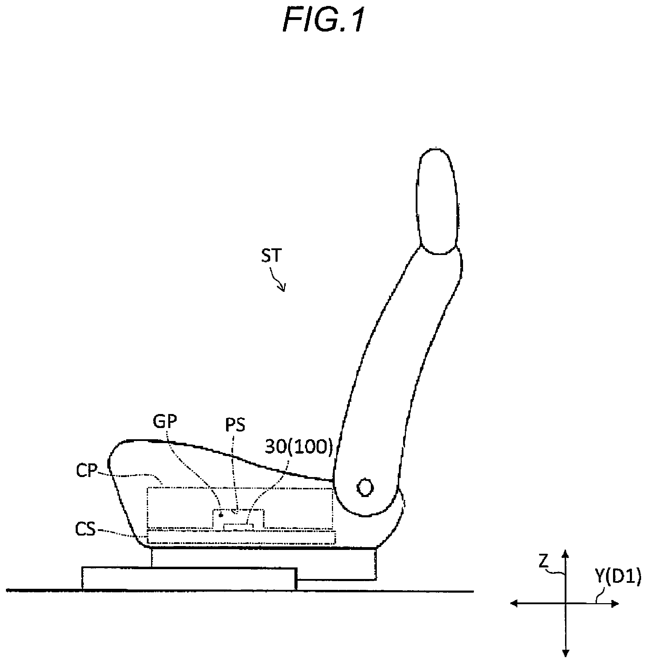

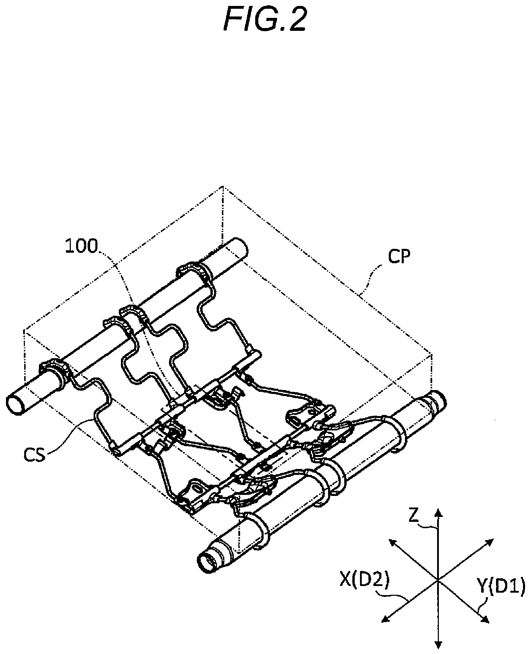

As illustrated in Figs. 1 and 2, a vehicle seat ST includes a cushion pad CP on which an occupant sits, a cushion spring CS that supports the cushion pad CP, and a seating detection device 100 having a load sensor 30 that detects that the occupant sits on the vehicle seat ST.

The cushion pad CP is made of, for example, a soft sponge material such as foamed urethane. In addition, as illustrated in Fig. 1, the cushion pad CP includes a gap GP cut out in a substantially rectangular parallelepiped shape at a bottom portion. In plan view of the cushion pad CP, the gap GP is formed at a center of the bottom portion of the cushion pad CP. In addition, in plan view of the cushion pad CP, the seating detection device 100 is disposed at a position overlapping with the gap GP.

When the occupant sits on the cushion pad CP (vehicle seat ST), a load is applied to the cushion pad CP. Then, the cushion pad CP is deformed downward and a lower surface of the cushion pad CP is displaced downward. As a result, a portion at which the gap GP of the cushion pad CP is formed presses the load sensor 30. In the following description, in the cushion pad CP, a surface forming an upper surface of the gap GP is also referred to as a "pressing surface PS" in that it is a surface pressing the load sensor 30.

As illustrated in Fig. 2, in the cushion spring CS, a plurality of so-called "S springs" continuously bent in an S shape are used. In addition, the cushion spring CS supports the cushion pad CP form below. Thus, the cushion spring CS receives the cushion pad CP flexibly deformed by the applied load and is elastically deformed by being pressed by the cushion pad CP. In addition, the seating detection device 100 is disposed in central two of a plurality of the cushion springs CS. Moreover, in the embodiment, the cushion spring CS corresponds to an example of a "support member" that supports the cushion pad CP.

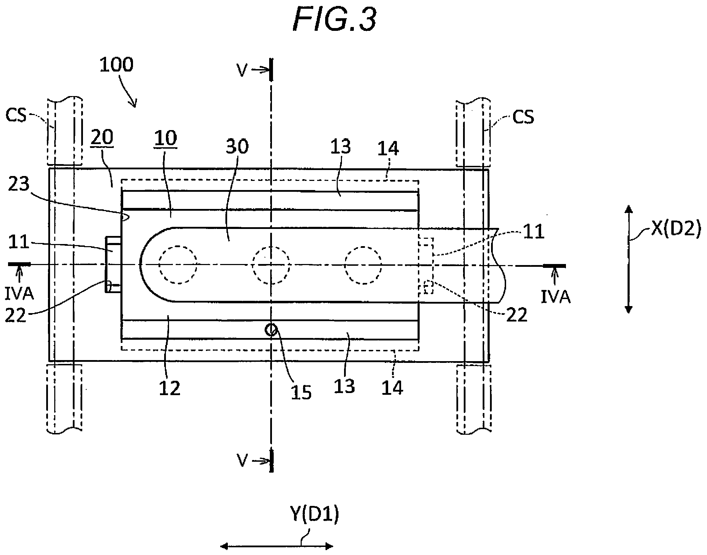

As illustrated in Fig. 3, the seating detection device 100 includes the load sensor 30 that detects the load applied to the cushion pad CP (vehicle seat ST), a first holder 10 that supports the load sensor 30, and a second holder 20 that supports the first holder 10.

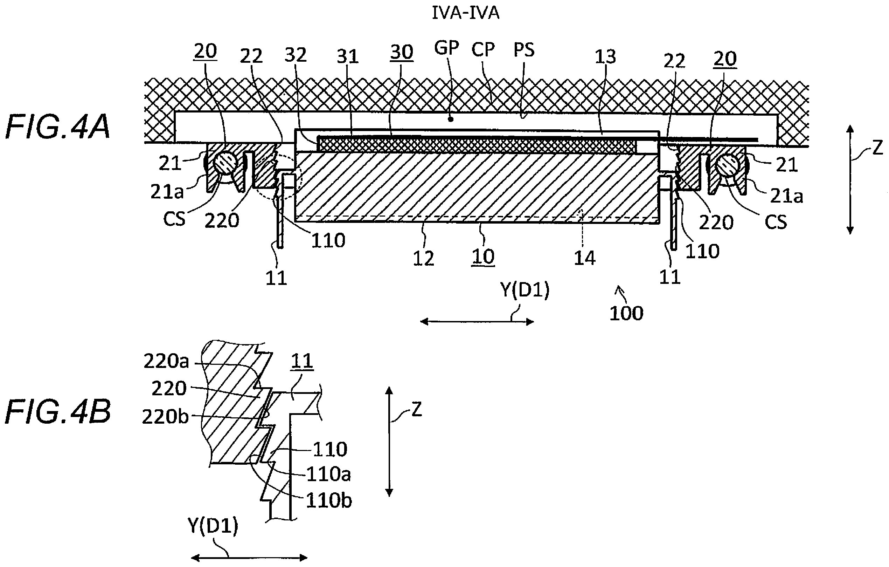

As illustrated in Fig. 4A, the load sensor 30 has a switch 31 and a buffer 32. The switch 31 is a film-like membrane switch and is attached to the buffer 32 made of a sponge material. When the load is applied to the vehicle seat ST, and the cushion pad CP is displaced downward, the pressing surface PS of the cushion pad CP presses the switch 31. Then, the switch 31 outputs a signal different from that of a case where the pressing surface PS is not pressed to an ECU (not illustrated) of the vehicle. Thus, the ECU of the vehicle determines whether or not the occupant sits on the vehicle seat ST based on contents of a signal output from the load sensor 30 (switch 31).

Moreover, in a state where the seating detection device 100 is assembled to the vehicle seat ST, a direction substantially orthogonal to a detection surface of the film-like switch 31 corresponds to the vertical direction Z. In the vertical direction Z, a side on which the switch is provided is an upper side and a side on which the buffer 32 is provided is a lower side.

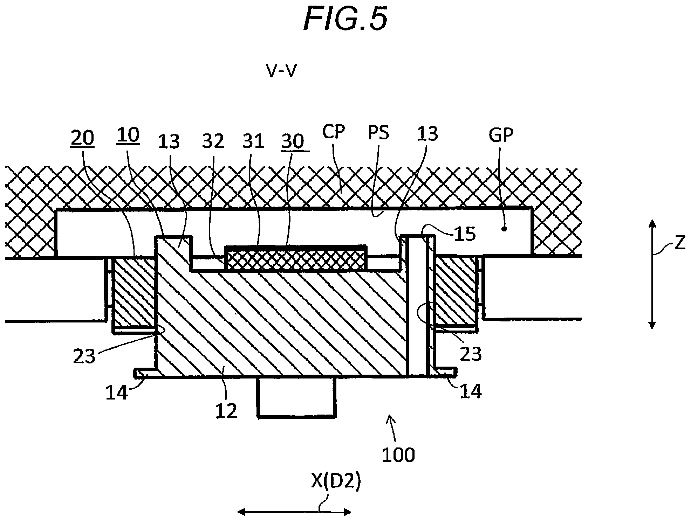

As illustrated in Figs. 4 and 5, the first holder 10 includes a support portion 12 that supports the load sensor 30, a projection piece 11 that projects downward from a side portion of the support portion 12, a vertical wall 13 that extends upward from an upper end of the support portion 12, and a stopper 14 that extends laterally from the support portion 12. In addition, the first holder 10 is formed of a through-hole 15 penetrating in the vertical direction Z. In the embodiment, the projection piece 11, the vertical wall 13, and the stopper 14 are provided by two to form pairs.

As illustrated in Fig. 4A, the support portion 12 is a substantially rectangular parallelepiped shape. The support portion 12 supports the load sensor 30 above a center portion in plan view.

The projection piece 11 is cantilevered on the support portion 12. Specifically, the projection piece 11 extends outward from a side surface of the support portion 12 in the forward and backward direction Y and then extends downward. In the projection piece 11, a portion extending in the forward and backward direction Y is shorter than a portion extending in the vertical direction Z.

As illustrated in Fig. 4B, a first rack portion 110 is formed on the portion of the projection piece 11 extending in the vertical direction Z on the outside in the forward and backward direction Y. The first rack portion 110 has a plurality of teeth having a first tooth surface 110a substantially orthogonal to the vertical direction Z and a second tooth surface 110b inclined with respect to the first tooth surface 110a. Moreover, if a direction orthogonal to the vertical direction Z is referred to as a "first direction D1", it can be said that the projection pieces 11 are provided on both sides of the support portion 12 in the first direction D1. In the embodiment, the first direction D1 is the forward and backward direction Y.

As illustrated in Fig. 5, the vertical walls 13 are provided on both sides of the support portion 12 in the width direction X so as to sandwich an installation region of the load sensor 30. Here, assuming that an extending direction of the vertical wall 13 is the height direction, if the upper end of the support portion 12 is taken as a reference, the height of the vertical wall 13 is higher than a height of the load sensor 30 in a state of being provided in the support portion 12.

The stopper 14 extends outward from the side surface of the support portion 12 in the width direction X. The stopper 14 is in a form of a plate and is provided in the forward and backward direction Y. Moreover, assuming that a direction orthogonal to the vertical direction Z, and the first direction D1 is a "second direction D2", the stoppers 14 are provided on the both sides of the support portion 12 in the second direction D2. In the embodiment, the second direction D2 is the width direction X.

The through-hole 15 penetrates the vertical wall 13 of one side and the support portion 12 in the vertical direction Z.

Moreover, the first holder 10 is molded, for example, by using a resin material. It is preferable that an elastic modulus of the first holder 10 is an elastic modulus such that the projection piece 11 can be deformed by human force.

As illustrated in Figs. 3 to 5, the second holder 20 is in a form of a plate. The second holder 20 has a pair of engaging portions 21 engaging with the cushion spring CS. In addition, in the second holder 20, an accommodation hole 23 is formed at a center portion in plan view and an engaging hole 22 is formed at an end portion of the accommodation hole 23 in the forward and backward direction Y (first direction D1).

The engaging portion 21 may have any shape as long as it can engage with the cushion spring CS. For example, as illustrated in Fig. 4A, the engaging portions 21 may be a pair of pinching strips 21a formed at intervals corresponding to an outer diameter of the cushion springs CS. The pair of pinching strips 21a clamp the cushion springs CS so that the second holder 20 is fixed to the cushion springs CS.

As illustrated in Fig. 3, the accommodation hole 23 has a rectangular shape in plan view in the vertical direction Z. The accommodation hole 23 is formed to be large enough to accommodate the support portion 12 of the first holder 10. In plan view of the seating detection device 100 illustrated in Fig. 3, a length of the accommodation hole 23 in the width direction X (second direction D2) is less than a length of the first holder 10 in the width direction X. Here, the length of the first holder 10 in the width direction X is a distance from an end surface of the stopper 14 on one side to an end surface of the stopper 14 on the other side in the first holder 10.

The engaging hole 22 has a rectangular shape in plan view in the vertical direction Z. The engaging hole 22 is formed to have a size capable of accommodating the projection piece 11 of the first holder 10. As illustrated in Figs. 4A and 4B, a second rack portion 220 is formed on an inside of the engaging hole 22 in the forward and backward direction Y. The second rack portion 220 has a plurality of teeth having a first tooth surface 220a substantially orthogonal to the vertical direction Z and a second tooth surface 220b inclined with respect to the first tooth surface 220a. The teeth of the second rack portion 220 are formed so as to correspond to the teeth of the first rack portion 110 and have a shape in which the teeth of the first rack portion 110 are reversed up and down, and forward and downward.

The first holder 10 is accommodated on the inside of the accommodation hole 23 and the engaging hole 22 so that the second holder 20 supports the first holder 10. Specifically, the first rack portion 110 of the first holder 10 meshes with the second rack portion 220 of the second holder 20 so that the second holder 20 supports the first holder 10.

In addition, the first rack portion 110 of the first holder 10 and the second rack portion 220 of the second holder 20 configure a one-way gear structure which allows or restricts mutual sliding directions. That is, in a case where the first holder 10 is pushed upward with respect to the second holder 20, the second tooth surfaces 110b and 220b of the first rack portion 110 of the first holder 10 and the second rack portion 220 of the second holder 20 slide relative to each other so that the movement of the first holder 10 with respect to the second holder 20 is allowed. In this case, the projection piece 11, in which the first rack portion 110 of the first holder 10 is formed, is elastically deformed. On the other hand, in a case where the first holder 10 is pushed downward with respect to the second holder 20, the first tooth surfaces 110a and 220a of the first rack portion 110 of the first holder 10 and the second rack portion 220 of the second holder 20 slide in contact with each other so that the movement of the first holder 10 with respect to the second holder 20 is restricted.

Next, an operation when the seating detection device 100 of the embodiment is assembled to the vehicle seat ST will be described with reference to Figs. 1, 4, 6, and 7.

As illustrated in Fig. 1, in a state where the seating detection device 100 is assembled to the vehicle seat ST, a certain distance may be provided between the load sensor 30 and the pressing surface PS of the cushion pad CP. If the distance is too small or too large, there is a concern that the load sensor 30 erroneously detects a baggage on the vehicle seat ST as the occupant, or there is no detection even if the occupant sits. Therefore, it is preferable that the pressing surface PS and the load sensor 30 have such a positional relationship that the distances are ideal distances preset.

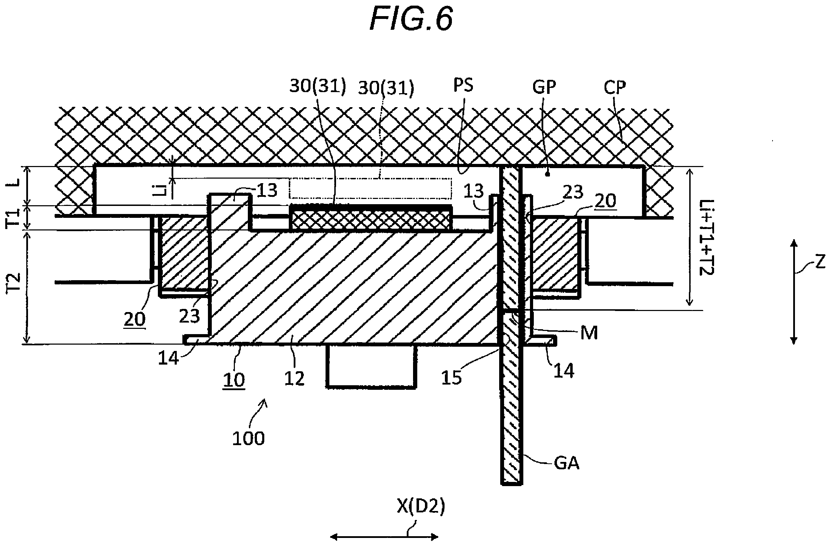

Moreover, in the following description, as illustrated in Fig. 6, in a state where the seating detection device 100 is assembled to the vehicle seat ST, a distance between the pressing surface PS of the cushion pad CP and the upper surface of the load sensor 30 is referred to as a "distance L". In addition, the distance L when the accuracy of detection of seating of the occupant by the load sensor 30 is the highest is referred to as an "ideal distance Li". The load sensor 30 which is at a position at which the distance L is the ideal distance Li is illustrated by a two-dot chain line in Fig. 6.

As illustrated in Fig. 4A, in a case where the seating detection device 100 is assembled to the vehicle seat ST, first, the engaging portion 21 of the second holder 20 and the cushion spring CS are engaged. Then, the vehicle seat ST is assembled to the cushion spring CS so that the cushion pad CP is supported by the cushion spring CS. In this case, as illustrated in Fig. 6, the distance L is set to be greater than the ideal distance Li in advance. That is, the first holder 10 is positioned below the second holder 20.

Here, as illustrated in Fig. 6, a rod-shaped gauge GA is inserted into the through-hole 15. In the gauge GA, if a thickness of the load sensor 30 is T1 and a thickness of the support portion 12 is T2, a mark M is provided at a position obtained by adding the ideal distance Li, the thickness T1, and the thickness T2 from a tip of the gauge GA. That is, when the distance L becomes the ideal distance Li, the mark M of the gauge GA is exposed from the lower surface of the support portion 12.

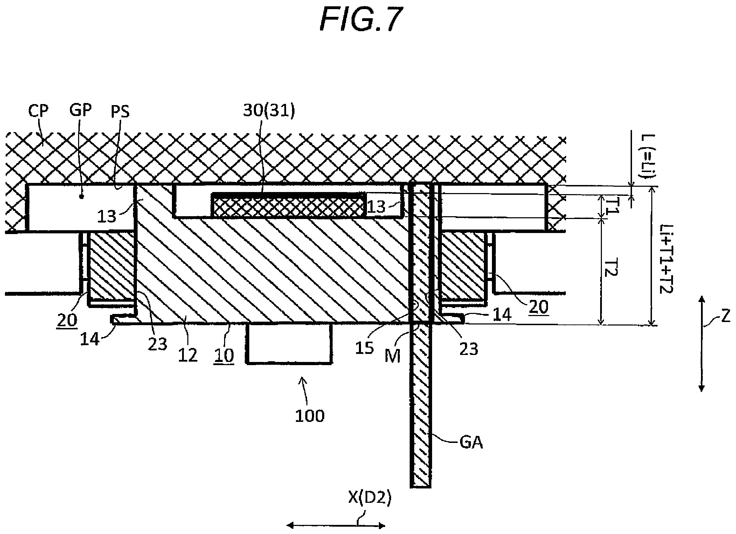

As illustrated in Fig. 7, the first holder 10 is pushed upward until the mark M of the gauge GA is exposed from the lower surface of the support portion 12 so that the distance L is adjusted to the ideal distance Li.

In addition, in a case where the first holder 10 is further pushed upward after the distance L becomes the ideal distance Li, that is, in a case where the distance L becomes smaller than the ideal distance Li, the tip of the projection piece 11 illustrated in Fig. 4A is elastically deformed inward in the forward and backward direction Y. Then, engagement between the first rack portion 110 and the second rack portion 220 is released. Therefore, the first holder 10 is moved in the downward direction and then is pushed upward again so that the distance L is adjusted.

Moreover, as illustrated in Fig. 7, the movement of the first holder 10 in the upward direction is restricted by abutting the stopper 14 of the first holder 10 against the second holder 20 at a certain position.

As described above, according to the seating detection device 100 of the embodiment, the following effects can be obtained.

In a case where the seating detection device is assembled to the vehicle seat ST, there is a concern that the distance L is deviated from the ideal distance Li due to a dimensional deviation of a configuration member with respect to the assembling position of the seating detection device, an assembling variation of the seating detection device with respect to the vehicle seat ST, or the like. In this regard, in a state where the seating detection device 100 of the embodiment is assembled to the vehicle seat ST, the distance L can be adjusted to close to the ideal distance Li by providing the first rack portion 110 in the first holder 10 and the second rack portion 220 in the second holder 20. That is, deterioration of the positioning accuracy of the load sensor 30 is suppressed.

It is possible to insert the gauge GA capable of measuring the distance L by providing the through-hole 15. Therefore, it is possible to easily adjust the distance L to the ideal distance Li while using the gauge GA.

The tips of a pair of the projection pieces 11 are elastically deformed inwardly so that the engagement between the first rack portion 110 and the second rack portion 220 can be released. Therefore, in a case where the distance L is too small, the first holder 10 is moved downward with respect to the second holder 20 so that the distance L can be adjusted again.

The cushion pad CP comes into contact with the vertical wall 13 earlier than the load sensor 30 by providing the vertical wall 13. Therefore, a portion of the cushion pad CP facing the load sensor 30 is likely to bend and deform in the downward direction that is a direction orthogonal to the switch 31 of the load sensor 30. As a result, deterioration of the detection accuracy of the load sensor 30 can be suppressed.

Moreover, the seating detection device 100 of the embodiment may be changed as follows.

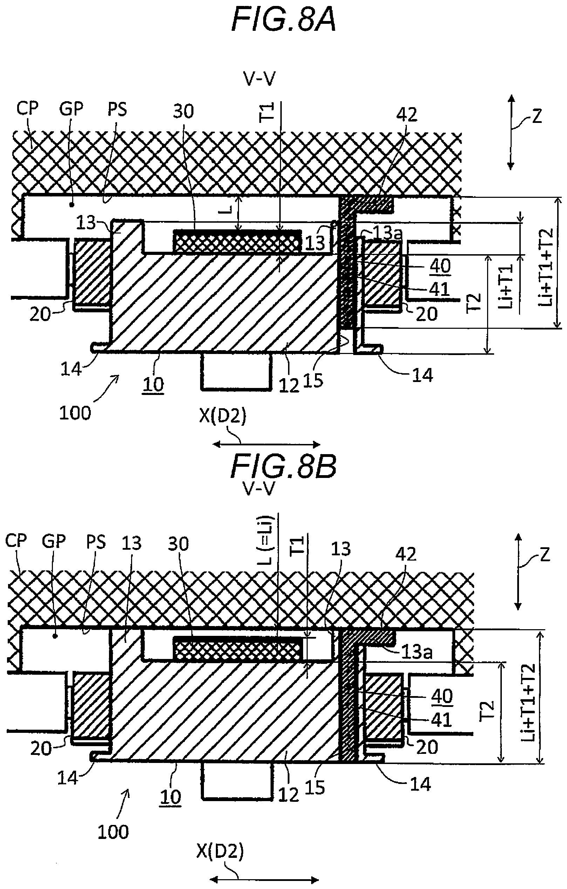

As illustrated in Figs. 8A and 8B, a movable member 40 as an example of a "notifying portion" may be provided. The movable member 40 includes a sliding body 41 that slides on an inner peripheral surface of the through-hole 15 and a contact body 42 that is in contact with the pressing surface PS. The movable member 40 has a substantially L shape in which the sliding body 41 and the contact body 42 are bent. The contact body 42 is in a form of a plate and it is preferable that an upper surface thereof is flat. The through-hole 15 and the sliding body 41 are fitted to such a degree that the sliding body 41 does not move downward due to its own weight, but moves when a force greater than its own weight is applied in the vertical direction Z.

In addition, in a case where the movable member 40 is provided, a notch 13a for accommodating the contact body 42 is formed at a tip of the vertical wall 13. A length of the notch 13a in the vertical direction Z is equal to a length of the contact body 42 in the vertical direction Z. That is, as illustrated in Fig. 8B, when the contact body 42 is accommodated in the notch 13a, an upper end of the vertical wall 13 and an upper end of the movable member 40 are flush with each other.

Furthermore, in a case where the movable member 40 is provided, a height of the vertical wall 13 is a sum of the ideal distance Li and the thickness T1 of the load sensor 30. In addition, a length of the movable member 40 from the upper end to the lower end in the vertical direction Z is a sum of the ideal distance Li, the thickness T1 of the load sensor 30, and the thickness T2 of the support portion 12. That is, the length of the movable member 40 from the upper end to the lower end in the vertical direction Z is a sum of a height of the vertical wall 13 and a thickness of the support portion 12.

As illustrated in Fig. 8A, when the first holder 10 is pushed upward from a state where the distance L is longer than the ideal distance Li, the contact body 42 is pressed against the pressing surface PS so that the movable member 40 is moved downward relative to the first holder 10. Therefore, as illustrated in Fig. 8B, the contact body 42 is accommodated in the notch 13a, the vertical wall 13 abuts against the pressing surface PS of the cushion pad CP, and the tip of the sliding body 41 and the lower surface of the support portion 12 are flush with each other. Here, since the height of the vertical wall 13 is the sum of the ideal distance Li and the thickness T1 of the load sensor 30, when the vertical wall 13 is in contact with the pressing surface PS, the distance L becomes the ideal distance Li. As described above, the movable member 40 notifies that the seating detection device is disposed at the ideal position because the tip of the sliding body 41 and the lower surface of the support portion 12 are flush with each other. As described above, according to the seating detection device having the configuration, an operator can easily adjust the distance L while checking the tip of the sliding body 41.

In a case where the "notifying portion" such as the movable member 40 is not provided, the vertical wall 13 may not be provided. Also in this case, it is possible to suppress deterioration of the positioning accuracy of the load sensor 30 in that the distance L can be changed in a state of being assembled to the vehicle seat ST.

The through-hole 15 may not be provided in the first holder 10. Also in this case, it is possible to suppress deterioration of the positioning accuracy of the load sensor 30 in that the distance L can be changed in a state of being assembled to the vehicle seat ST.

The through-hole 15 may not be opened to the vertical wall 13. That is, it may be opened only to the support portion 12.

A member corresponding to the "support member" may not be the cushion spring CS. For example, the member may be a frame that supports the cushion pad CP at a lower portion of the vehicle seat ST.

The stopper 14 may be provided at the tip (lower end) of the projection piece 11. Therefore, the first holder 10 can be easily configured compared to a case where the projection piece 11 and the stopper 14 are separately provided.

The load sensor 30 may not have the pressure sensitive type switch 31. For example, a strain gauge or the like may be used as long as it detects the load applied to the vehicle seat ST.

The vertical wall 13 may be extended to a periphery of the load sensor 30, three or more may extend, or may extend so as to surround the periphery of the load sensor 30.

The buffer 32 may not be provided in the load sensor 30. Also in this case, it is possible to detect the load applied to the vehicle seat by the switch 31 of the load sensor 30.

The switch 31 of the load sensor 30 may be attached to a lower side of the buffer 32. In this case, the distance L is a distance between the pressing surface PS of the cushion pad CP and the upper surface of the buffer 32 of the load sensor 30.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention. Accordingly, it is expressly intended that all such variations, changes and equivalents which fall within the scope of the present invention as defined in the claims, be embraced thereby.

## Claims

1. A seating detection device (100) which is intended to be disposed below a cushion pad (CP) of a vehicle seat (ST), comprising:
a load sensor (30) that is configured to detect a load that is applied to the vehicle seat (ST) and transmitted via the cushion pad (CP);
a first holder (10) that supports the load sensor (30); and
a second holder (20) that supports the first holder (10) and includes an engaging portion (21) that engages with a support member (CS) for supporting the cushion pad (CP),
wherein the second holder (20) supports the first holder (10) so as to be capable of moving the first holder (10) in a vertical direction.

2. The seating detection device according to claim 1,
wherein the first holder (10) has a vertical wall (13) extending around the load sensor (30) and higher than the load sensor (30).

3. The seating detection device according to claim 2, further comprising:
a notifying portion (40) that is configured to notify that an upper end of the vertical wall (13) is in contact with the cushion pad (CP).

4. The seating detection device according to claim 1 or 2,
wherein the first holder (10) is provided with a through-hole (15) penetrating the first holder (10) in the vertical direction.
